# EUROPÄISCHE PATENTSCHRIFT

(11) **EP 2 353 916 B1**
(45) Veröffentlichungstag und Bekanntmachung des Hinweises auf die Patenterteilung: **04.01.2017**
(21) Anmeldenummer: 10192485.0
(22) Anmeldetag: 25.11.2010
(51) Int. Cl.: B60K 17/02, B60K 23/08, B60W 30/02, B60W 30/18

(54) **Ansteuerverfahren für eine Kupplungsanordnung sowie Antriebsstrang für ein Kraftfahrzeug**
Method for controlling a coupling assembly and power transmission for a motor vehicle
Procédé de commande pour un agencement d'embrayage et conducteur de commande pour un véhicule automobile

(30) Priorität: 13.01.2010 DE 102010005065
(43) Veröffentlichungstag der Anmeldung: 10.08.2011
(73) Patentinhaber: GETRAG Getriebe- und Zahnradfabrik Hermann Hagenmeyer GmbH & Cie KG, 74199 Untergruppenbach (DE)
(72) Erfinder: Höck, Michael, 53819, Neunkirchen-Seelscheid (DE); Niessen, Harwin, 50354, Hürth (DE)
(74) Vertreter: Witte, Weller & Partner Patentanwälte mbB

(56) Entgegenhaltungen:
- DE-A1- 19 836 686
- DE-A1-102006 026 188
- DE-A1-102007 030 091
- DE-A1-102009 039 347
- DE-A1-102010 043 780
- FR-A1- 2 808 575
- US-A1- 2002 139 634
- US-A1- 2007 294 018

## Beschreibung

Die vorliegende Erfindung betrifft ein Verfahren zum Ansteuern einer Kupplungsanordnung eines Kraftfahrzeugantriebsstranges, wobei die Kupplungsanordnung eine erste und eine zweite Reibkupplung mit einem gemeinsamen Eingangsglied aufweist, das mit einer Antriebseinheit verbunden ist, wobei die erste Reibkupplung ein erstes Ausgangsglied aufweist, das mit einer ersten Antriebswelle verbunden ist, und wobei die zweite Reibkupplung ein zweites Ausgangsglied aufweist, das mit einer zweiten Antriebswelle verbunden ist, wobei die Antriebswellen mit einem ersten bzw. einem zweiten Antriebsrad des Fahrzeugs verbunden sind.

Die Erfindung betrifft ferner einen Antriebsstrang für ein Kraftfahrzeug, der eine Antriebseinheit und eine solche Kupplungsanordnung aufweist.

Bei Kraftfahrzeugen wird die Antriebsleistung einer Antriebseinheit in der Regel mittels eines Differential- bzw. Ausgleichsgetriebes auf zwei Antriebsräder verteilt. Das Differentialgetriebe gleicht dabei die unterschiedlichen Drehzahlen der Antriebsräder bei Kurvenfahrten aus. Dabei wird zwischen dem linken und dem rechten Antriebsrad ein Drehmomentgleichgewicht hergestellt.

Aus dem Dokument DE 10 2004 046 008 A1 ist eine Kupplungsanordnung der eingangs beschriebenen Art bekannt, bei der Antriebsleistung ohne mechanisches Differentialgetriebe mittels einer ersten und einer zweiten Reibkupplung auf ein erstes bzw. ein zweites Antriebsrad übertragen wird.

In dem dort beschriebenen Antriebsstrang wird diese Twin-Kupplungsanordnung für eine zuschaltbare Achse eines vierradgetriebenen Fahrzeugs verwendet. Dabei sind die Reibkupplungen dieser Twin-Kupplungsanordnung im Normalfall geöffnet und werden unabhängig nach Bedarf geschlossen. Hierdurch wird ein "torque-vectoring"-Antriebskonzept realisiert. Details zur Ansteuerung der

Twin-Kupplungsanordnung sind in diesem Dokument nicht genannt.

Aus dem Dokument DE 10 2007 030 091 A1, das die Merkmale des Oberbegriffs von
Anspruch 1 offenbart, ist ein Antriebsstrang für ein Kraftfahrzeug mit einem schaltbaren
Getriebe und einer Seitenwellen aufweisenden Antriebsachse bekannt, die über eine differenziallos arbeitende Achsantriebseinheit angetrieben ist. Die Achsantriebseinheit weist einen Achsantriebskörper auf, der über Seitenwellenkupplungen mit den Seitenwellen zusammenwirkt. Zur Unterbrechung des durch das schaltbare
Getriebe geleiteten Leistungsflusses werden die Seitenwellenkupplungen
betätigt. Dabei bildet eine Art der Drehmomentregelung der

Twin-Kupplungsanordnung sind in diesem Dokument nicht genannt.

Aus dem Dokument DE 10 2007 030 091 A1 ist ein Antriebsstrang für ein Kraftfahrzeug mit einem schaltbaren Getriebe und einer Seitenwellen aufweisenden Antriebsachse bekannt, die über eine differenziallos arbeitende Achsantriebseinheit angetrieben ist. Die Achsantriebseinheit weist einen Achsantriebskörper auf, der über Seitenwellenkupplungen mit den Seitenwellen zusamrnermrirkt. Zur Unterbrechung des durch das _schaltbare Getriebe geleiteten Leistungsflusses werden die Seitenwellenkugplungen betätigt. Dabei bildet eine Art der Drehmomentregelung der Seitenwellen die Funktion eines offenen Differentials ab. Eine weitere Regelungsvariante bildet hingegen das Verhalten eines Sperrdifferenzials ab.

Vor dem obigen Hintergrund ist es eine Aufgabe der Erfindung, ein verbessertes Verfahren zum Ansteuern einer Kupplungsanordnung sowie einen verbesserten Antriebsstrang für ein Kraftfahrzeug anzugeben.

Diese Aufgabe wird bei dem eingangs genannten Ansteuerverfahren durch die Merkmale des kennzeichnenden Teils von Anspruch 1 gelöst.

Ferner wird die obige Aufgabe gelöst durch einen Antriebsstrang, der ein Steuergerät aufweist, das zur Durchführung des oben genannten Verfahrens eingerichtet ist.

Das erfindungsgemäße Ansteuerverfahren wird vorzugsweise bei einachsgetriebenen Kraftfahrzeugen verwendet, so dass die Reibkupplungen der Kupplungsanordnung im Normalfall bei Geradeausfahrt geschlossen sind. Alternativ kann das Verfahren auch auf mehrachsgetriebene Fahrzeuge angewendet werden, bei denen die Reibkupplungen als "hang-on"-Kupplungen ausgebildet sind und in der Regel geöffnet sind. In diesem Fall ist das erfindungsgemäße Verfahren auf solche Anwendungsfälle beschränkt, bei denen beide Reibkupplungen zugeschaltet sind.

Bei einem einachsgetriebenen Fahrzeug wird das normalerweise vorhandene mechanische Differentialgetriebe durch eine Twin-Kupplungsanordnung ersetzt. Bei Geradeausfahrt sind, wie gesagt, die Reibkupplungen im Normalfall geschlossen. Zum Zwecke der Beeinflussung des Giermomentes bei einer Kurvenfahrt (torque-vectoring) sind die Reibkupplungen der Twin-Kupplungsanordnung vorzugsweise unabhängig voneinander betätigbar. Details hierzu sind der eingangs genannten Anmeldung DE 10 2004 046 008 zu entnehmen.

Durch die Maßnahme, das Antriebsmoment beider Antriebsräder auf das - in der Regel geringere - auf die Fahrbahn übertragbare Antriebsmoment des Antriebsrades mit dem niedrigeren Reibwert zu beschränken, wenn Fahrbahnoberflächen mit unterschiedlichen Reibwerten (sogenannte µ-Split-Oberflächen) befahren werden, kann mit der Twin-Kupplungsanordnung die Funktion eines offenen Differentialgetriebes nachgebildet werden, das als Momentenwaage ausgebildet ist. Dabei werden die Antriebsmomente auf beide Räder in gleicher Höhe verteilt, entsprechend dem Niveau des Rades mit dem geringeren Kraftschlusspotential.

Da die Reibkupplungen der Twin-Kupplungsanordnung während der Fahrt normalerweise beide geschlossen sind, würde ohne die erfindungsgemäße Maßnahme beim Befahren einer µ-Split-Fahrbahn durch die unterschiedlich hohen Vortriebskräfte an den Antriebsrädern ein Giermoment aufgebaut, so dass sich das Fahrzeug um die Hochachse drehen würde.

Durch die erfindungsgemäße Maßnahme wird das übertragbare Antriebsmoment bei unterschiedlichem Rad-Kraftschlusspotential auf der einen bzw. der anderen Seite (links bzw. rechts) auf das geringste Moment begrenzt, um das Prinzip einer Drehmomentwaage (offene Differenzialfunktion) darzustellen.

Die Erfindung wird somit vollkommen gelöst.

Erfindungsgemäß wird die Beschränkung des Antriebsmomentes bei Erfassung unterschiedlicher Reibwerte nur dann durchgeführt, wenn die Geschwindigkeit des Fahrzeugs größer ist als ein Schwellenwert.

Der Schwellenwert kann beispielsweise ein fester Wert im Bereich von 1 bis 120 km/h sein. In einer nicht beanspruchten Ausführungsform wird der Schwellenwert ein- oder ausgerampt, beginnend beispielsweise bei ca. 0-50 km/h auf beispielsweise ca. 100 km/h. Bei ca. 100 km/h ist dann die offene Differenzialfunktion erreicht. Das Ein- bzw. Ausrampen muss nicht linear erfolgen, sondern kann über eine vorgegebene Kennlinie erfolgen. Es kann auch ein Restsperrmoment oberhalb von ca. 100 km/h aufrechterhalten werden, d.h. das Ausblenden des Normalbetriebes wird nicht vollständig auf Null zurückgekommen.

Durch das Verwenden eines Schwellenwertes wird erfindungsgemäß erreicht, dass bei höheren Geschwindigkeiten die Funktion der Drehmomentwaage eingerichtet wird, so dass unerwartete Giermomente um die Hochachse bei höheren Geschwindigkeiten vermieden werden.
Bei niedrigeren Geschwindigkeiten hingegen können solche Giermomente leicht ausgeglichen werden.

Erfindungsgemäß wird beim Anfahren auf einer µ-Split-Fahrbahn durch Schließen beider Kupplungen die Funktion eines vollständig gesperrten Differentialgetriebes erzielt, so dass die Traktion erhöht wird. Demzufolge wird die Beschränkung des Antriebsmomentes bei niedrigen Geschwindigkeiten nicht durchgeführt.

Die bei niedrigen Geschwindigkeiten auftretende Gierreaktion des Fahrzeugs ist akzeptabel, und kann durch entsprechende Regelalgorithmen oder von Hand ausgeglichen werden.

Die Erfindung wird somit vollkommen gelöst.

Gemäß einer bevorzugten Ausführungsform wird die Beschränkung des Antriebsmomentes bei Erfassung unterschiedlicher Reibwerte dann nicht durchgeführt, wenn eine Kurvenfahrt mit erhöhter Querbeschleunigung durchgeführt wird. Der Beschränkungsalgorithmus würde das Drehmoment auf das kurveninnenlaufende Rad begrenzen. Mit der Twin-Kupplungsanordnung kann hingegen durch entsprechende zusätzliche Algorithmen die Kurvengrenzgeschwindigkeit im Vergleich zu einem offenen Differentialgetriebe gesteigert werden.

Vorzugsweise werden die Kupplungsdrücke der Reibkupplungen im Normalbetrieb in Abhängigkeit von einer Differenz zwischen einer Solldrehzahl und einer Istdrehzahl des jeweiligen Antriebsrades unabhängig voneinander geregelt.

Von besonderem Vorzug ist es, wenn die Kupplungsclrücke der Reibkupplungen im Normalbetrieb in Abhängigkeit von einer Differenz zwischen einer Solldrehzahldifferenz und einer Istdrehzahldifferenz zwischen dem gemeinsamen Eingangsglied und den jeweiligen Ausgangsgliedern unabhängig voneinander geregelt werden.

Von besonderem Vorzug ist es hierbei, wenn die Solldrehzahldifferenz im Zugbetrieb so eingerichtet wird, dass das Eingangsglied eine höhere Drehzahl aufweist als die jeweiligen Ausgangsglieder.

In entsprechender Weise ist es bevorzugt, wenn die Solldrehzahldifferenz im Schubbetrieb so eingerichtet wird, dass das Eingangsglied eine geringere Drehzahl aufweist als die jeweiligen Ausgangsglieder der Reibkupplungen.

Hierdurch kann die Ansteuerbarkeit verbessert werden und es ergibt sich eine hohe Regelstabilität.

Die Solldrehzahldifferenz ist dabei in der Regel eine Funktion der Raddrehzahlen, des Lenkwinkels, der Querbeschleunigung, etc.

Bei einer Kurvenfahrt ist die Solldrehzahldifferenz des kurvenäußeren Rades grundsätzlich sehr klein, aber vorzugsweise immer größer Null. Die Solldrehzahldifferenz des kurveninneren Rades ist dabei immer größer als die Solldrehzahldifferenz des kurvenäußeren Rades. Hierdurch kann ein torque-vectoring zur Erzielung höherer Kurvengrenzgeschwindigkeiten erzielt werden.

Ferner ist es hierbei bevorzugt, wenn bei Erfassung von unterschiedlichen Reibwerten die Kupplungsdrücke beider Reibkupplungen auf den Kupplungsdruck jener Reibkupplung geregelt werden, die dem Antriebsrad mit dem niedrigeren Reibwert zugeordnet ist.

Wird folglich eine µ-Split-Überfahrt mit höherer Geschwindigkeit erkannt, so erhalten beide Reibkupplungen den niedrigsten der beiden berechneten Reibkupplungsdrücke. Das heißt, wenn beispielsweise das linke Antriebsrad auf einer Oberfläche mit geringem Reibwert (µ-low) fährt, so erhalten beide Reibkupplungen den für die linke Reibkupplung berechneten Kupplungsdruck. Das System verhält sich damit wie ein offenes Differential.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einem erfindungsgemäßen Antriebsstrang;
- Fig. 2: eine schematische Darstellung von angetriebenen Rädern des Antriebsstranges der Fig. 1 bei Geradeausfahrt;
- Fig. 3: die Antriebsräder der Fig. 2 bei einer Kurvenfahrt;
- Fig. 4: die Antriebsräder der Fig. 2 bei einer Fahrt auf einer µ-Split-Fahrbahn;
- Fig. 5: eine schematische Darstellung zur Regelung von Kupplungsdrücken der Reibkupplungen des in Fig. 1 gezeigten Antriebsstranges im Normalfall; und
- Fig. 6: eine der Fig. 5 entsprechende Darstellung für den Fall einer µ-Split-Überfahrt.

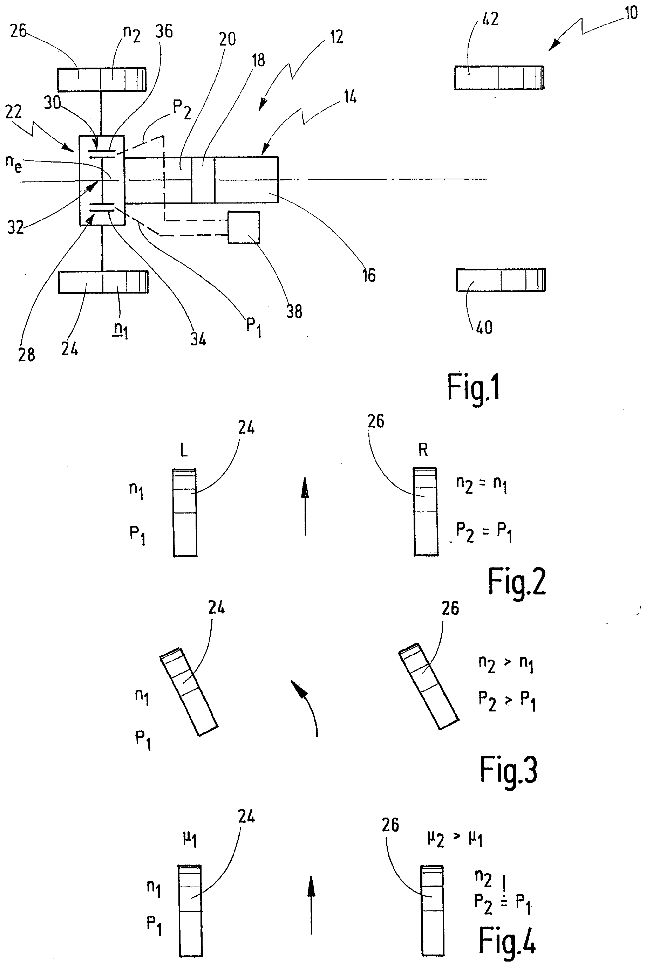

In Fig. 1 ist ein Kraftfahrzeug, wie beispielsweise ein Personenkraftwagen, schematisch dargestellt und mit 10 bezeichnet.

Das Fahrzeug 10 weist einen Antreibsstrang 12 mit einer Antriebseinheit 14 auf. Die Antriebseinheit 14 beinhaltet einen Antriebsmotor 16, wie beispielsweise einen Verbrennungsmotor oder einen Hybrid-Antriebsmotor, gegebenenfalls eine Startkupplung 18 und ein Getriebe 20 (beispielsweise ein Stufengetriebe oder ein stufenloses Getriebe).

Ein Ausgang des Getriebes 20 ist mit einer Twin-Kupplungsunordnung 22 verbunden, über die eine Antriebsleistung der Antriebseinheit 14 auf ein erstes Antriebsrad 24 und ein zweites Antriebsrad 26 verteilt wird.

Die Twin-Kupplungsanordnung 22 beinhaltet eine erste Reibkupplung 28 und eine zweite Reibkupplung 30, die ein gemeinsames Eingangsglied 32 aufweisen. Das Eingangsglied 32 ist mit dem Ausgang des Getriebes 20 verbunden.

Die erste Reibkupplung 28 weist ein erstes Ausgangsglied 34 auf, das über eine nicht näher bezeichnete Antriebswellen mit dem ersten Antriebsrad 24 verbunden ist. Die zweite Reibkupplung 30 weist ein zweitens Ausgangsglied 36 auf, das über eine nicht näher bezeichnete Antriebswelle mit dem zweiten Antriebsrad 26 verbunden ist.

Die Reibkupplungen 28, 30 sind zur Übertragung von hohen Antriebsmomenten ausgelegt und beispielsweise jeweils als nass laufende Lamellenkopplung ausgebildet. Die Reibkupplungen 28, 30 sind generell unabhängig voneinander ansteuerbar, und zwar mittels einer Steuereinrichtung 38.

Bei. 40 und 42 sind ferner nicht angetriebene Räder des Fahrzeugs 10 gezeigt.

Die Antriebsräder 24, 26 können die Räder einer Vorderachse eines Fahrzeugs 10 sein, oder die Räder einer Hinterachse des Fahrzeugs 10. Die Antriebseinheit 14 kann längs oder quer in dem Fahrzeug 10 eingebaut sein.

Sofern die Reibkupplungen 28, 30 auch zum Anfahren ausgelegt sind, kann die Antriebseinheit 14 gegebenenfalls auch ohne Startkupplung 18 ausgebildet werden.

Die Drehzahl des ersten Antriebsrades 24 ist mit n₁ bezeichnet. Die Drehzahl des zweiten Antriebsrades 26 ist mit n₂ bezeichnet. Die Drehzahl des gemeinsamen Eingangsgliedes 32 der Twin-Kupplungsanordnung 22 ist mit nₑ bezeichnet.

Ferner ist in Fig. 1 schematisch angedeutet, dass die Steuereinrichtung 38 die erste Reibkupplung 28 mit einem ersten Kupplungsdruck p₁ ansteuert, und die zweite Reibkupplung 30 mit einem zweiten Kupplungsdruck p₂.

In Fig. 2 sind die Antriebsräder 24, 26 für den Fall einer Geradeausfahrt gezeigt. In diesem Fall sind in der Regel beide Reibkupplungen 28, 30 geschlossen. Die Drehzahlen n₁, n₂ sind identisch. Ferner sind auch die Kupplungsdrücke p₁, p₂ identisch.

In Fig. 3 sind die Antriebsräder 24, 26 für den Fall einer Kurvenfahrt gezeigt. In diesem Fall ist das zweite Antriebsrad 26 das kurvenäußere Rad und weist dementsprechend eine höhere Drehzahl n₂ auf als die Drehzahl n₁ des kurveninneren Antriebsrades 24. In entsprechender Weise ist der Kupplungsdruck p₂ der zugeordneten zweiten Reibkupplung 30 in der Regel größer als der Kupplungsdruck p₁ der dem ersten Antriebsrad 24 zugeordneten Reibkupplung.

In Fig. 4 sind die Antriebsräder 24, 26 für den Fall einer Fahrt auf einer Fahrbahn mit unterschiedlichem Reibwert gezeigt. Dabei fährt das erste Antriebsrad 24 auf einer Oberfläche mit einem Reibwert µ₁. Das zweite Antriebsrad 26 fährt dabei auf einer Fahrbahn mit einem Reibwert µ₂, der größer ist als µ₁.

Eine solche Situation kann beispielsweise vorliegen, wenn das erste Antriebsrad 24 auf einer vereisten Oberfläche fährt, und das zweite Antriebsrad 26 auf einer trockenen Fahrbahnoberfläche.

Wenn in diesem Fall die Reibkupplungen 28, 30 so angesteuert werden, dass jedes Rad das maximale Antriebsmoment abgeben kann, das über das jeweilige Antriebsrad 24, 26 übertragbar ist, würde ein hohes Giermoment um die Hochachse des Fahrzeugs 10 erzeugt werden.

Denn die Reibkupplung 28, die dem Antriebsrad 24 mit dem niedrigeren Reibwert zugeordnet ist, würde auf einen deutlich geringeren Kupplungsdruck p₁ geregelt werden als die zweite Reibkupplung 30.

Um das Auftreten solcher Giermomente zu vermeiden, insbesondere, wenn das Fahrzeug mit höherer Geschwindigkeit fährt, wird der Kupplungsdruck p₂ der zweiten Reibkupplung 30, die dem Antriebsrad 26 mit dem höheren Reibwert µ₂ zugeordnet ist, auf den gleichen - niedrigeren - Kupplungsdruck p₂ eingestellt, der der ersten Reibkupplung 28 zugeteilt wird, die dem Antriebsrad 24 mit dem niedrigeren Reibwert µ₁ zugeordnet ist.

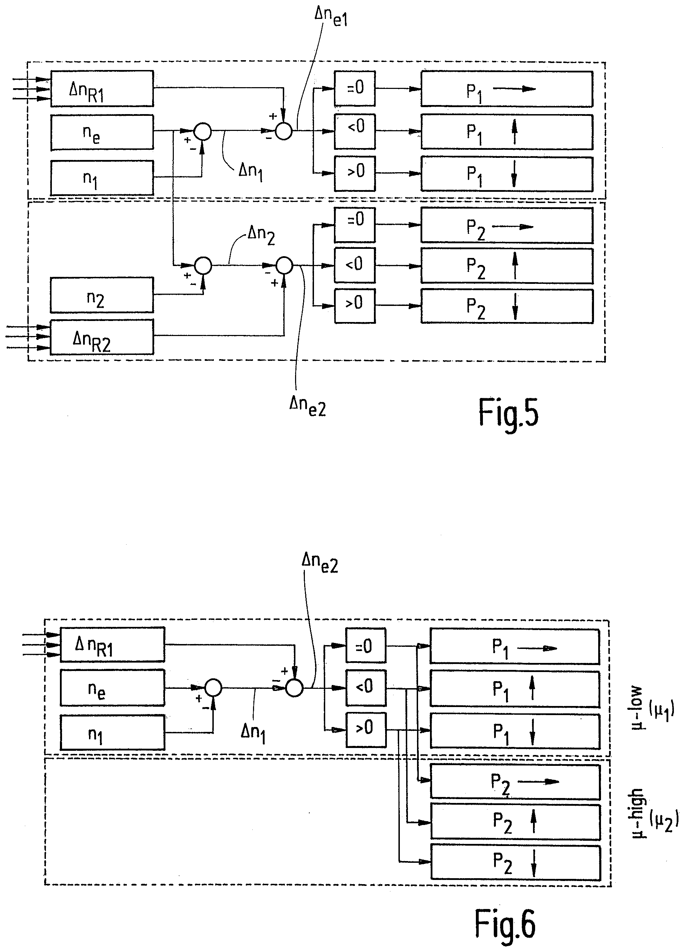

Fig. 5 zeigt in schematischer Form einen Regelalgorithmus zum Regeln der Kupplungsdrücke p₁, p₂ während einer Normalfahrt (Geradeausfahrt oder Kurvenfahrt).

Es ist generell zu erkennen, dass die Kupplungsdrücke p₁, p₂ im Wesentlichen unabhängig voneinander geregelt werden.

Die Kupplungsdrücke p₁, p₂ werden dabei jeweils auf einen solchen Wert geregelt, dass zwischen dem gemeinsamen Eingangsglied 32 und dem jeweiligen Ausgangsglied 34, 36 eine Drehzahldifferenz eingerichtet wird. Im Zugbetrieb dreht das Eingangsglied 32 schneller als die jeweiligen Ausgangsglieder 34, 36. Im Schubbetrieb ist es genau umgekehrt.

Die Drehzahldifferenz kann sehr gering sein. Vorzugsweise ist die Drehzahldifferenz kleiner als ca. 40 U/min, beispielsweise 5 U/min.

Folglich wird für die erste Reibkupplung 28 eine erste Solldrehzahldifferenz Δn_{R1} vorgegeben. Ferner wird eine Istdrehzahldifferenz Δn_{R2} gebildet, und zwar indem die gemessene Drehzahl nₑ des Eingangsgliedes 32 und die gemessene Drehzahl n₁ des ersten Antriebsrades 24 voneinander subtrahiert werden. Der erste Kupplungsdruck p₁ wird in Abhängigkeit von der hierdurch gebildeten ersten Regelabweichung Δnₑ₁ gebildet. Wenn Δnₑ₁ = 0 ist, wird der erste Kupplungsdruck p₁ beibehalten. Wenn Δnₑ₁ < 0, wird der erste Kupplungsdruck p₁ erhöht. Wenn Δnₑ₁ > 0, dann wird der erste Kupplungsdruck p₁ verringert.

Die Regelung des zweiten Kupplungsdruckes p₂ erfolgt in entsprechender Weise unter Bildung einer Istdrehzahldifferenz Δn₂, die von einer Solldrehzahldifferenz Δn_{R2} abgezogen wird, so dass eine zweite Regelabweichung Δnₑ₂ gebildet wird.

Fig. 6 zeigt den Fall, dass unterschiedliche Reibwerte für die zwei Antriebsräder 24, 26 erfasst werden (wie in Fig. 4 dargestellt).

In diesem Fall wird der Kupplungsdruck beider Reibkupplungen auf den gleichen Wert eingestellt, und zwar auf den Kupplungsdruck jener Reibkupplung, die dem Antriebsrad mit dem niedrigeren Reibwert zugeordnet ist. Dies ist im vorliegenden Fall der erste Kupplungsdruck p₁.

Der erste Kupplungsdruck p₁ wird auf die gleiche Weise geregelt wie im Falle der Fig. 5. Im vorliegenden Fall werden die entsprechenden Kupplungsdruckwerte jedoch auch der zweiten Reibkupplung 30 zugeleitet. Hierdurch wird die Funktion eines offenen mechanischen Differentials erzielt, also eine Art Drehmomentwaage eingerichtet, die auf das Antriebsmoment abstellt, das über das Antriebsrad übertragbar ist, das auf der Fahrbahn mit niedrigerem Reibwert fährt (vorliegend µ₁). Die Erfassung, ob das erste und das zweite Antriebsrad auf Fahrbahnoberflächen mit unterschiedlichen Reibwerten fahren, kann auf unterschiedliche Art und Weise ermittelt werden. Beispielsweise kann dies über den Verlauf der Kupplungsdrücke ermittelt werden. Hierbei kann gegebenenfalls auch der Lenkwinkel berücksichtigt werden. Generell kann der Reibwert der Fahrbahnoberfläche auch ohne Berücksichtigung der Kupplungsdrücke aus Lenkwinkel, Geschwindigkeit, Gierwinkel ermittelt werden, oder auf jede beliebige andere Art und Weise.

## Patentansprüche

1. Verfahren zum Ansteuern einer Kupplungsanordnung (22) eines Kraftfahrzeugantriebsstranges (12), wobei die Kupplungsanordnung (22) eine erste und eine zweite Reibkupplung (28, 30) mit einem gemeinsamen Eingangsglied (32) aufweist, das mit einer Antriebseinheit (14) verbunden ist, wobei die erste Reibkupplung (28) ein erstes Ausgangsglied (34) aufweist, das mit einer ersten Antriebswelle verbunden ist, und wobei die zweite Reibkupplung (30) ein zweites Ausgangsglied (36) aufweist, das mit einer zweiten Antriebswelle verbunden ist, wobei die Antriebswellen mit einem ersten bzw. einem zweiten Antriebsrad (24, 26) des Fahrzeugs (10) verbunden sind, wobei bei Erfassung von unterschiedlichen Reibwerten (µ-low, µ-high) der Fahrbahnoberflächen des ersten bzw. des zweiten Antriebsrades (24, 26) die erste und die zweite Reibkupplung (28, 30) derart angesteuert werden, dass das Antriebsmoment beider Antriebsräder (24, 26) auf das auf die Fahrbahn übertragbare Antriebsmoment des Antriebsrades mit dem niedrigeren Reibwert beschränkt wird,
und wobei
die Beschränkung des Antriebsmomentes bei Erfassung unterschiedlicher Reibwerte nur dann durchgeführt wird, wenn die Geschwindigkeit des Fahrzeugs (10) größer ist als ein Schwellenwert, so dass unerwartete Giermomente um eine Hochachse (15) bei Geschwindigkeiten des Fahrzeugs oberhalb des Schwellenwertes vermieden werden,
**dadurch gekennzeichnet, dass**
dann, wenn die Geschwindigkeit des Fahrzeugs (10) kleiner ist als der Schwellenwert durch Schließen beider Kupplungen die Funktion eines vollständig gesperrten Differenzials eingerichtet wird.

2. Ansteuerverfahren nach Anspruch 1, **dadurch gekennzeichnet, dass** die Kupplungsdrücke (p₁, p₂) der Reibkupplungen (28, 30) im Normalbetrieb in Abhängigkeit von einer Differenz zwischen einer Solldrehzahl und einer Istdrehzahl des jeweiligen Antriebsrades unabhängig voneinander geregelt werden.

3. Ansteuerverfahren nach Anspruch1 oder 2, **dadurch gekennzeichnet, dass** die Kupplungsdrücke (p₁, p₂) der Reibkupplungen (28, 30) im Normalbetrieb in Abhängigkeit von einer Differenz zwischen einer Solldrehzahidifferenz (Δn_{R1}, Δn_{R2}) und einer Istdrehzahldifferenz (Δn₁ Δn₂) zwischen dem gemeinsamen Eingangsglied (32) und den jeweiligen Ausgangsgliedern (34, 36) unabhängig voneinander geregelt werden.

4. Ansteuerverfahren nach Anspruch 3, wobei die Soltdrehzahldifferenz (Δn_{R1}, Δn_{R2}) im Zugbetrieb so eingerichtet wird, dass das Eingangsglied (32) eine höhere Drehzahl aufweist als die jeweiligen Ausgangsglieder (34, 36) der Reibkupplungen.

5. Ansteuerverfahren nach Anspruch 3 oder 4, wobei die Solldrehzahldifferenz (Δn_{R1}, Δn_{R2}) im Schubbetrieb so eingerichtet wird, dass das Eingangsglied (32) eine geringere Drehzahl aufweist als die jeweiligen Ausgangsglieder (34, 36) der Reibkupplungen.

6. Ansteuerverfahren nach einem der Ansprüche 1 - 5, **dadurch gekennzeichnet, dass** bei Erfassung von unterschiedlichen Reibwerten (µ-low, µ-high) Kupplungsdrücke (p₁, p₂) beider Reibkupplungen (28, 30) auf den Kupplungsdruck der Reibkupplung geregelt werden, die dem Antriebsrad mit dem niedrigeren Reibwert (µ-low) zugeordnet ist.

7. Antriebsstrang (12) für ein Kraftfahrzeug (10), mit einer Antriebseinheit (14) und einer Kupplungsanordnung (22) zur Verteilung von Antriebsleistung auf ein erstes und ein zweites Antriebsrad (24, 26) des Kraftfahrzeuges (10), wobei die Kupplungsanordnung (22) eine erste und eine zweite Reibkupplung (28, 30) mit einem gemeinsamen Eingangsglied (32) aufweist, das mit der Antriebseinheit (14) verbunden ist, wobei die erste Reibkupplung (28) ein erstes Ausgangsglied (34) aufweist, das mit einer ersten Antriebswelle verbunden ist, und wobei die zweite Kupplung (30) ein zweites Ausgangsglied (36) aufweist, das mit einer zweiten Antriebswelle verbunden ist, wobei die Antriebswellen mit dem ersten bzw. dem zweiten Antriebsrad (24, 26) des Fahrzeugs (10) verbunden sind, und ferner mit einem Steuergerät (38), das zur Durchführung des Verfahrens nach einem der Ansprüche 1 - 6 eingerichtet ist.

## Claims

1. Method for actuating a clutch arrangement (22) of a motor vehicle drivetrain (12), the clutch arrangement (22) comprising a first friction clutch (28) and a second friction clutch (30) having a common input element (32), which is connected to a power unit (14), the first friction clutch (28) comprising a first output element (34), which is connected to a first drive shaft, and the second friction clutch (30) comprising a second output element (36), which is connected to a second drive shaft, the drive shafts being connected to a first drive wheel (24) and a second drive wheel (26) respectively of the vehicle (10), wherein, when different coefficients of friction (µ-low, µ-high) of the road surfaces of the first drive wheel (24) and the second drive wheel (26) are registered, the first friction clutch (28) and the second friction clutch (30) are actuated in such a way that the drive torque of both drive wheels (24, 26) is limited to the drive torque of the drive wheel having the lower coefficient of friction, that can be transmitted to the road surface, and wherein the limitation of the drive torque when different coefficients of friction are registered is performed only if the speed of the vehicle (10) exceeds a threshold value so that unwanted yawing moments about a vertical axis (15) at vehicles speeds above the threshold value are avoided,
**characterized in that**
the function of a fully locked differential is established when the speed of the vehicle (10) is smaller than the threshold value.

2. Method of actuation according to Claim 1, **characterized in that** the clutch pressures (p₁, p₂) of the friction clutches (28, 30) in normal operation are controlled independently of one another as a function of a difference between a set rotational speed and an actual rotational speed of the respective drive wheel.

3. Method of actuation according to Claim 1 or 2, **characterized in that** the clutch pressures (p₁, p₂) of the friction clutches (28, 30) in normal operation are controlled independently of one another as a function of a difference between a set rotational speed difference (Δn_{R1}, Δn_{R2}) and an actual rotational speed difference (Δn₁, Δn₂) between the common input element (32) and the respective output elements (34, 36).

4. Method of actuation according to Claim 3, wherein the set rotational speed difference (Δn_{R1}, Δn_{R2}) in tractive operation is set so that the input element (32) has a higher rotational speed than the respective output elements (34, 36) of the friction clutches.

5. Method of actuation according to Claim 3 or 4, wherein the set rotational speed difference (Δn_{R1}, Δn_{R2}) in overrun conditions is set so that the input element (32) has a lower rotational speed than the respective output elements (34, 36) of the friction clutches.

6. Method according to one of Claims 1 to 5, **characterized in that** when different coefficients of friction (µ-low, µ-high) are registered, the clutch pressures (p₁, p₂) of both friction clutches (28, 30) are adjusted to the clutch pressure of the friction clutch which is assigned to the drive wheel having the lower coefficient of friction (µ-law).

7. Drivetrain (12) for a motor vehicle (10), having a power unit (14) and a clutch arrangement (22) for distributing drive power output to a first drive wheel (24) and a second drive wheel (26) of the motor vehicle (10), the clutch arrangement (22) comprising a first friction clutch (28) and a second friction clutch (30) having a common input element (32), which is connected to the power unit (14), the first friction clutch (28) comprising a first output element (34), which is connected to a first drive shaft, and the second clutch (30) comprising a second output element (36), which is connected to a second drive shaft, the drive shafts being connected to the first drive wheel (24) and the second drive wheel (26) respectively of the vehicle (10), and furthermore having a control unit (38), which is set up to perform the method according to one of Claims 1 to 6.

## Revendications

1. Procédé de commande d'un ensemble d'embrayage (22) d'un train d'entraînement (12) de véhicule automobile, l'ensemble d'embrayage (22) présentant un premier et un deuxième embrayage à friction (28, 30) dotés d'un organe commun d'entrée (32) raccordé à une unité d'entraînement (14),
le premier embrayage à friction (28) présentant un premier organe de sortie (34) relié à un premier arbre d'entraînement et le deuxième embrayage à friction (30) présentant un deuxième organe de sortie (36) relié à un deuxième arbre de sortie,
les arbres de sortie étant reliés respectivement à une première et à une deuxième roue motrice (24, 26) du véhicule (10),
le premier et le deuxième embrayage à friction (28, 30) étant commandés de telle sorte que le couple d'entraînement des deux roues motrices (24, 26) soit limité au couple d'entraînement qui peut être appliqué sur la chaussée par la roue motrice qui présente la valeur de frottement la plus basse lorsque la première et de la deuxième roue d'entraînement (24, 26) ont des valeurs différentes de frottement (µ-low, µ-high) de leur surface en contact avec la chaussée,
la limitation du couple d'entraînement en cas de détection de valeurs de frottement différentes n'étant exécutée que si la vitesse du véhicule (10) est supérieure à une valeur de seuil de manière à éviter des couples de lacet inattendus autour d'un axe vertical (15) lorsque la vitesse du véhicule est supérieure à la valeur de seuil,
**caractérisé en ce que**
le fonctionnement d'un différentiel à blocage complet est établi par fermeture des deux embrayages lorsque la vitesse du véhicule (10) est inférieure à la valeur de seuil.

2. Procédé de commande selon la revendication 1, **caractérisé en ce qu'**en fonctionnement normal, les pressions d'embrayage (p₁, p₂) des embrayages à friction (28, 30) sont régulées de manière indépendante l'une de l'autre en fonction de la différence entre une vitesse de rotation de consigne et la vitesse de rotation effective de la roue motrice concernée.

3. Procédé de commande selon les revendications 1 ou 2, **caractérisé en ce qu'**en fonctionnement normal, les pressions d'embrayage (p₁, p₂) des embrayages à friction (28, 30) sont régulées indépendamment l'une de l'autre en fonction de la différence entre la différence des vitesses de rotation de consigne (Δn_{R1}, Δn_{R2}) et de la différence (Δn₁, Δn₂) entre la différence des vitesses de rotation effectives de l'organe d'entrée commun (32) et de chacun des organes de sortie (34, 36).

4. Procédé de commande selon la revendication 3, dans lequel la différence (Δn_{R1}, Δn_{R2}) entre les vitesses de rotation de consigne est établie en traction, l'organe d'entrée (32) présentant une vitesse de rotation plus élevée que chacun des organes de sortie (34, 36) des embrayages à friction.

5. Procédé de commande selon les revendications 3 ou 4, dans lequel la différence (Δn_{R1}, Δn_{R2}) entre les vitesses de rotation de consigne est établie en fonctionnement en poussée, l'organe d'entrée (32) présentant une vitesse de rotation plus basse que chacun des organes de sortie (34, 36) des embrayages à friction.

6. Procédé de commande selon l'une des revendications 1 à 5, **caractérisé en ce que** lorsque des valeurs de frottement différentes (µ-low, µ-high) sont détectées, les pressions (p₁, p₂) des deux embrayages à friction (28, 30) sont régulées à la pression de l'embrayage à friction associé à la roue motrice qui présente la valeur de frottement (µ-low) la plus basse.

7. Train d'entraînement (12) pour un véhicule (10), qui présente une unité d'entraînement (14) et un ensemble d'embrayage (22) qui répartit la puissance d'entraînement entre une première et une deuxième roue motrice (24, 26) du véhicule automobile (10), l'ensemble d'embrayage (22) présentant un premier et un deuxième embrayage à friction (28, 30) et un organe d'entrée commun (32) relié à l'unité d'entraînement (14), le premier embrayage à friction (28) présentant un premier organe de sortie (34) relié à un premier arbre d'entraînement et le deuxième embrayage (30) présentant un deuxième organe de sortie (36) relié à un deuxième arbre d'entraînement, les arbres d'entraînement étant reliés respectivement à la première et à la deuxième roue motrice (24, 26) du véhicule (10), et présentant en outre un appareil de commande (38) conçu pour mettre en oeuvre le procédé selon l'une des revendications 1 à 6.
